# EUROPEAN PATENT SPECIFICATION

(11) **EP 3 403 431 B1**
(45) Date of publication and mention of the grant of the patent: **12.07.2023**
(21) Application number: 17701650.8
(22) Date of filing: 13.01.2017
(51) Int. Cl.: H04W 16/14

(54) **SHARED COMMUNICATION SPECTRUM MANAGEMENT**
GETEILTE KOMMUNIKATIONSSPEKTRUMSVERWALTUNG
SYSTÈME DE GESTION DU SPECTRE DE COMMUNICATION PARTAGÉE

(30) Priority: 14.01.2016 EP 16151240
(43) Date of publication of application: 21.11.2018
(73) Proprietor: Koninklijke KPN N.V., 3072 AP Rotterdam (NL); Nederlandse Organisatie voor toegepast- natuurwetenschappelijk onderzoek TNO, 2595 DA 's-Gravenhage (NL)
(72) Inventor: ZHANG, Haibin, 2274 EA Voorburg (NL); CHRYSALLOS, Manolis, 5612 BC Eindhoven (NL); TRICHIAS, Konstantinos, 18345 Athens (GR)
(74) Representative: Wuyts, Koenraad Maria
(86) International application number: PCT/EP2017/050679
(87) International publication number: WO 2017/121856

(56) References cited:
- US-A1- 2014 162 666
- US-A1- 2015 156 636
- US-A1- 2015 304 853

## Description

### Field of the Invention

The present invention relates to shared communication spectrum management. More in particular, the present invention relates to a method of releasing a spectrum resource shared between two wireless communication systems, and to an apparatus for managing a shared spectrum resource.

### Background of the Invention

Wireless communication systems, for example systems for mobile communication such as UMTS (Universal Mobile Telecommunications System) or LTE (Long Term Evolution), typically use a designated part of the electromagnetic spectrum, often referred to as frequency band or a spectrum resource. A certain type of wireless communication system is normally only allowed to use its designated spectrum resource. As wireless systems become more popular, suitable spectrum resources become scarce.

Licensed Shared Access (LSA) is a concept which allows spectrum resources which were previously unavailable to public network operators to be made available to so-called LSA licensees, parties which are granted access to a spectrum resource previously unavailable to them. Such previously unavailable spectrum may include spectrum resources reserved for (and often licensed to) so-called incumbents, such as the military or emergency services. Typically, such spectrum resources are used only occasionally and/or are only used in certain geographic areas, leaving them unused for most of the time and/or in most areas. LSA makes it possible to use these spectrum resources more efficiently by allowing access to licensees, such as public mobile communication operators, thus sharing these spectrum resources. Another, similar shared access concept is ASA (Authorized Shared Access).

LSA/ASA can be defined as complementary way of authorizing and accessing spectrum (also known as spectrum resources), in addition to licensed (exclusive) and license-exempt (unlicensed), which enables the sharing of spectrum between a limited number of licensed users. Based on a commercial agreement and under an adequate regulatory framework, a non-mobile incumbent, which may be defined as a current holder of spectrum rights of use which have not been granted through an award procedure for commercial use, could allow part of their assigned spectrum to be used by a LSA/ASA user (such as a mobile operator).

Sharing spectrum resources has the disadvantage that the incumbent may want to use a shared spectrum resource while it is in use by a licensee. This requires the licensee to clear the spectrum resource upon request from the incumbent. Typically, this clearing or evacuating has to be accomplished in a short amount of time, in particular when the incumbent uses the spectrum resource to provide an emergency service, for example.

United States patent application US2014/0162666 (Nokia Siemens Networks) discloses a method for coordinating spectrum evacuation to be used for spectrum sharing. The method includes instructing during a first time period a first subset of user equipment to transition from a first (shared) bandwidth to a second (dedicated) bandwidth. Later, during a second time period, the method includes instructing a second subset of user equipment to transition from the first bandwidth to the second bandwidth.

The method of US2014/0162666 has the disadvantage that the evacuation of the shared spectrum resource (the first bandwidth) is carried out per group of users. As a result, the shared spectrum will only be completely evacuated when all users have transitioned to another spectrum resource. This can often take more time than is acceptable for the incumbent.

The paper by M. Palola et al., "Live field trial of Licensed Shared Access (LSA) concept using LTE network in 2.3 GHz band," in 2014 IEEE International Symposium on Dynamic Spectrum Access Networks (DYSPAN), pp. 38-47, 1-4 April 2014, discloses an experiment in which it took a mobile communication system more than 30 seconds to evacuate and release the shared spectrum. The experiment was carried out under favorable conditions, the mobile communication system having a light load. In practice, therefore, the time to evacuate a shared spectrum may therefore be significantly longer. It will be understood that for incumbents such as emergency services or the military, such delays are unacceptable.

US 2015/0304853 discloses a method for channel evacuation of a shared spectrum channel. A secondary user base station may provide one or more secondary user wireless transmit receive unit (WTRUs) access to a shared spectrum channel. The secondary user base station may receive an evacuation message indicating a need for the secondary user WTRUs to evacuate the shared spectrum channel. The secondary user base station may coordinate channel evacuation of the shared spectrum channel in response to the evacuation message. This can take more time than acceptable.

### Summary of the Invention

It is an object of the present invention to solve this problem by providing a method which allows an incumbent quicker access to a shared spectrum. Accordingly, the present invention provides a method for a first wireless communication system and a second wireless communication system to share a spectrum resource, wherein the spectrum resource is divided into at least a first section and a second section, the method comprising:
- the second wireless communication system using the first section and the second section of the spectrum resource until a first point in time,
- the second wireless communication system clearing the first section of the spectrum resource from the first point in time, and
- the first wireless communication system using the first section of the spectrum resource from a second point in time,
- the second wireless communication system continuing to use the second section of the spectrum resource from the second point in time, wherein the second point in time is later than the first point in time,
- the second wireless communication system clearing, from a third point in time, the second section of the spectrum resource, and
- the first wireless communication system using, from a fourth point in time, the first section and the second section of the spectrum resource, wherein the fourth point in time is later than the third point in time.

By dividing the spectrum resource into at least a first section and a second section, as a preliminary measure, it becomes possible to clear the spectrum resource gradually, clearing section by section. This, in turn, makes it possible to quickly grant the first wireless communication system (the incumbent) access to at least part of the shared spectrum resource, the first section, as the remaining sections need not be immediately cleared by the second wireless communication system (typically operated by a public mobile operator).

Dividing the spectrum into sections also allows embodiments in which time limits for releasing the various spectrum sections can be defined. It is noted that the shared spectrum resource may be divided into more than two sections, for example four, sixteen or a hundred sections. Each section may be constituted by one or more channels, spectrum resources or frequency ranges, for example. The order of the first, second and any other frequency sections is preferably determined by the temporal order in which the second network requires them, the most urgently required section being the first section.

The shared spectrum resource may be the spectrum resource of a single carrier, in which case a section may be part of a carrier. In LTE systems, for example, a section could in that case be a single PRB (Physical Resource Block). Alternatively, the shared spectrum resource may comprise multiple carriers, in which case a section could either be one of the carriers, or part of one of the carriers.

By first clearing the first section of the spectrum, this section is made available to the first network as soon as possible. The first network preferably starts using the first section as soon as clearing of the first section has been completed, but any other sections need not be completely cleared, even though clearing of the first section and clearing of one or more other sections may take place substantially simultaneously, that is, the clearing of the sections may overlap in time. First clearing the first section allows the first section to be handed over relatively quickly.

More in particular, the second wireless communication system starts clearing the first section from a first point in time. It is noted that the second wireless communication system may also start clearing the second (and, optionally, any further section) from the first point in time, but that clearing the first section has priority. From a second, later point in time, the first wireless communication system can start using the first section. In accordance with embodiments of the invention, the first wireless communication system initially (that is, from the second point in time) uses the first section of the shared spectrum resource only.

The second point in time may be determined by a request from the first wireless communication system. That is, the method may further comprise the first wireless communication system issuing a request to the second wireless communication system, wherein the request comprises the second point in time. The request may, for example, trigger the clearing of the first section and thereby set the first point in time, while the time difference between the first point in time and the second point in time is predetermined. Alternatively, or additionally, the first wireless communication system may determine the second point in time by including it in the request. The second point in time may further be determined by spectrum resource use information from the second wireless communication system. That is, the second point in time may be additionally be determined by information relating to the use of the spectrum resource by the second wireless information system, for example information relating to the number of connections of the second wireless information system still present in the shared spectrum resource.

Alternatively, or additionally, the first point in time and/or the second point in time may be predetermined by the first wireless communication system and/or the second wireless communication system, for example by a prior agreement between the first wireless communication system and the second wireless communication system. A predetermined first or second point in time is advantageous if it is known beforehand that the first wireless communication system will require the use of (part of) the shared spectrum resource at a certain (that is, the second) point in time. In case only the second point in time is predetermined, the first point in time may be further determined by spectrum resource use information from the second wireless communication system: a high use of the first section or higher QoS (Quality of Service) requirements of the end users may delay the clearing of the first section, provided this has been agreed beforehand.

In an embodiment, the time duration between the first point in time and the second point in time is predetermined, preferably by the second wireless communication system. That is, the time required between the start of the clearing of the first section and the use of the first section by the first wireless communication system may be predetermined, for example by the second wireless communication system, and is preferably communicated to the first wireless communication system. This provides additional certainty for the first wireless communication system, typically the incumbent, when at least the first section of the shared spectrum resource will be available.

In another embodiment, the second point in time, and hence the required clearing time, will be determined by circumstances. In some embodiments, a maximum clearing time duration may be used, allowing the first section to be cleared before any predetermined time period is up.

The first section of the shared spectrum resource may not provide sufficient bandwidth for the requirements of the first wireless communication system. The method of the invention therefore further comprises:
- the second wireless communication system clearing, from a third point in time, the second section of the spectrum resource, and
- the first wireless communication system using, from a fourth point in time, the first section and the second section of the spectrum resource,
wherein the fourth point in time is later than the third point in time.

In such an embodiment, the first wireless communication system uses both the first and the second section from the fourth point in time, thus using more bandwidth than before.

In an embodiment, the third point in time is determined by a further request from the first wireless communication system. That is, clearing the second section of the shared spectrum may only be carried out in response to a further request from the first wireless communication system. The second section (and possibly any other sections) may therefore not be cleared automatically, but only upon request. This allows the amount of cleared spectrum to be made dependent on demand. In some cases the incumbent may only need a limited bandwidth to transmit emergency signals, for example, and may not need the entire shared spectrum. This has the advantage that fewer transmissions of the licensee have to be transitioned.

The fourth point in time may be determined by a further request from the first wireless communication systems. Alternatively, or additionally, the fourth point in time may be predetermined, for example by a prior agreement between the first wireless communication system and the second wireless communication system.

As mentioned above, the clearing of the second section may be carried out after clearing the first section, although the clearing of the first section and the second section may overlap in time.

In some embodiments, the first section and the second section may overlap and may therefore share at least some frequencies. In preferred embodiments, however, the first section and the second section of the shared spectrum are non-overlapping. This guarantees that cleared frequencies are available for use by the incumbent.

In some embodiments, the first section and the second section of the shared spectrum have substantially identical geographical coverages. That is, the first section and the second section are preferably not defined by their geographical properties but by their frequencies. However, the sections of the shared spectrum resource may also be associated with adjacent geographical areas, which areas may or may not overlap.

The sections of the shared spectrum may be determined dynamically, when the clearing is initiated or even during the clearing. However, in some embodiments at least the first section of the shared spectrum is predetermined. This allows a guaranteed first clearance to be defined, which may also be guaranteed within a certain time limit.

In some embodiments, the first section has a bandwidth which is at least 1% of the total bandwidth of the shared spectrum. However, the bandwidth of the first section may be less or more than 1%, for example 5%, 15%, or more. In an embodiment, a section corresponds with a single or several so-called Physical Resource Blocks (PRBs) as used in LTE systems. Such a PRB has a bandwidth of 180 kHz, while an LTE carrier may have a bandwidth ranging from 1.4 MHz to 20 MHz, for example. The shared spectrum resource may, for example, be located in the 2300 to 2400 MHz band.

In an embodiment, the first wireless communication system is a system for military communication or emergency service communication and/or the second wireless communication system is a system for public mobile communication. The system for mobile communication may, for example, be a UMTS system, an LTE system, or a next-generation mobile system (for example 5G).

Clearing may comprise at least one of aborting communications and transferring communications to another spectrum. Transferring (also referred to as transitioning) communications is preferred, but if the clearing of a spectrum section has to be completed within a certain amount of time, aborting communications may be necessary.

The present invention also provides a software program product comprising instructions for causing a processor to carry out the method as described above. The software program product may be stored on a tangible carrier, such as a DVD or a USB stick. Alternatively, the software program product may be stored on a server from which it may be downloaded using the Internet. The software program product contains software instructions which can be carried out by the processor of a device, such as a server, a user device (for example a smartphone), and/or a monitoring device.

The present invention further provides an apparatus for managing access to a spectrum resource shared between a first wireless communication system and a second wireless communication system, wherein the spectrum resource is divided into at least a first section and a second section, the apparatus comprising a spectrum resource management unit for managing the spectrum resource, wherein the spectrum resource management unit is configured for:
- assigning the first section and the section section of the spectrum resource to the second wireless communication system,
- causing the second wireless communication system to clear, from a first point in timethe first section of the spectrum resource,
- assigning, from a second point in time, the first section of the spectrum resource to the first wireless communication system,
- wherein the second point in time is later than the first point in time
- causing the second wireless communication system to clear, from a third point in time, at least the second section of the spectrum resource,
- assigning, from a fourth point in time, the second section of the spectrum resource to the first wireless communication system, wherein the fourth point in time is later than the second point in time.

The invention further provides a communication arrangement comprising a first wireless communication system, a second wireless communication system and an apparatus as described above. The apparatus and the communication arrangement offer advantages similar to those of the method described above.

It is noted that the invention relates to all possible combinations of features recited in the claims.

### Brief description of the drawings

The present invention will further be explained with reference to exemplary embodiments illustrated in the drawings, in which:
Fig. 1A schematically shows a first arrangement of wireless communication systems sharing a spectrum according to the invention.
Fig. 1B schematically shows a second arrangement of wireless communication systems sharing a spectrum according to the invention.
Fig. 2 schematically shows a first use of a spectrum resource shared between wireless communication systems according to the present invention.
Fig. 3 schematically shows a second use of a spectrum resource shared between wireless communication systems according to the present invention.
Fig. 4 schematically shows an embodiment of a method of releasing a shared spectrum according to the present invention.
Fig. 5 schematically shows a request message for requesting access to a spectrum resource in accordance with the invention.
Fig. 6 schematically shows a software program product for managing a communication spectrum according to the invention.
Fig. 7 is a schematic block diagram of a general system to be employed in the disclosed method.

### Detailed description of embodiments

The invention allows an efficient and rapid evacuation of a spectrum resource shared between two wireless communication systems, such as a (public) mobile network operator system and an emergency service system, where the emergency service system is the incumbent of a part of the spectrum resource that is shared with the mobile network operator system. In normal operation, this shared part of the spectrum resource is used by the mobile network operator system, but the incumbent may claim this shared part back when needed. By dividing the shared spectrum resource into sections which can be sequentially cleared, the incumbent can access at least part of the shared spectrum resource quicker.

The present invention is based upon the insight that an incumbent may obtain quicker access to a shared spectrum by clearing the shared spectrum gradually, that is, clearing the shared spectrum one section after the other. This allows the incumbent to obtain access to at least part of the shared spectrum quickly. The present invention benefits from the further insight that an incumbent and a licensee may make prior agreements concerning the sections of the shared spectrum that are to be cleared first, and concerning possible time limits for the clearance of one or more sections.

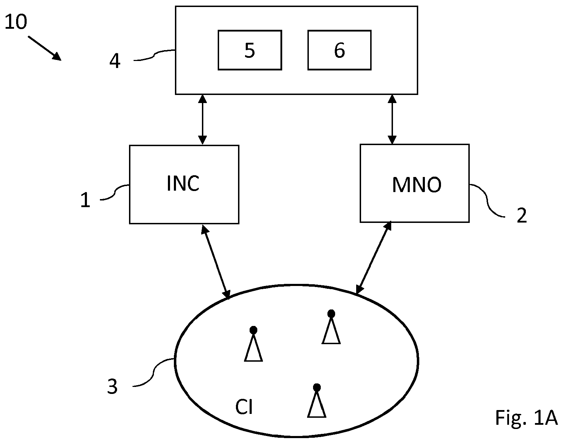

A communication arrangement according to the invention is schematically illustrated in Fig. 1A. The communication arrangement 10 is shown to comprise a first wireless communication system 1, a second wireless communication system 2, a communication infrastructure 3 and a spectrum management apparatus 4. The first wireless communication system 1 and the second wireless communication system 2 may each have network equipment for providing access to their respective group of end users. The network equipment (and the links between the nodes of the network equipment) of each wireless communication system may be deployed independently by the respective wireless communication system, or jointly. When used jointly, the network equipment of the wireless communication systems constitutes the communication infrastructure (CI) 3. The spectrum management apparatus 4 is connected to both wireless communication systems 1, 2 and allows the two systems to share a spectrum resource.

In the example shown, the first wireless communication system 1 is an emergency service communication system having a dedicated spectrum resource. This dedicated spectrum resource would traditionally not be available to the mobile network operator (MNO) system 2. However, using the License Shared Access (LSA) concept, the emergency service's spectrum resource can be used by the mobile network operator (MNO), provided that the emergency service may use its spectrum resource when needed. It is noted that although an emergency service is mentioned as an example of the service provided by the first wireless communication system 1, other services may, additionally or alternatively, be provided, such as military messaging services, police messaging services, flood watch services, etc..

It is further noted that the mobile network operator system 2 typically has its own dedicated spectrum resource, a licenced spectrum resource. The spectrum resource shared between the first wireless communication system 1 (in the present example an emergency system) and the second wireless communication system 2 (in the present example a public mobile network operator) typically is a spectrum resource which is licenced to a non-public service provider, such as an emergency service or the military, which non-public service provider is also known as the incumbent. The shared spectrum resource referred to above therefore is a spectrum resource which is not licensed to a public mobile network operator.

The arrangement 10 of wireless communication systems illustrated in Fig. 1A comprises a first wireless communication system 1 and a second wireless communication system 2. The first wireless communication system 1 may provide an emergency service, for example, while the second wireless communication system 2 may provide a mobile communication service, for example an LTE (Long Term Evolution) cellular communication service provided by a mobile network operator (MNO). The (combined) communication infrastructure (CI) 3 can comprise antennas for allowing wireless communication between the communication systems 1, 2 on the one hand and both mobile and stationary user equipment on the other hand. The first communication system 1, whose spectrum resource is shared with the second communication system 2, may be referred to as the communication system of the incumbent (INC).

Although in the embodiment shown in Fig. 1A the first wireless communication system 1 and the second wireless communication system 2 share the communication infrastructure 3, in other embodiments each wireless communication system may have its own, dedicated communication infrastructure. That is, in some embodiments the communication infrastructure of the incumbent (INC) and the mobile network operator (MNO) can be deployed separately, each party having its own base stations and antennas, for example.

The arrangement 10 further comprises a spectrum resource management apparatus 4 which is coupled with both the first wireless communication system 1 and the second wireless communication system 2. In the embodiment shown, the spectrum resource management apparatus 4 comprises a spectrum resource management unit 5 and a control unit 6. The spectrum resource management unit 5 is configured for managing the shared spectrum resource, in particular for managing assigning the shared spectrum resource to the sharing wireless communication systems.

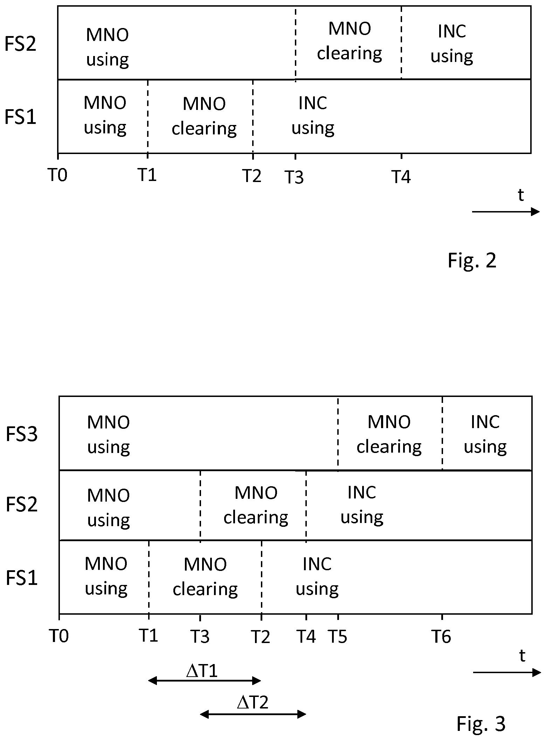

In accordance with the invention, the shared spectrum resource is divided into at least a first section and a second section, to allow the first wireless communication system 1 (the incumbent) to gain access to the shared spectrum resource per section. This will later be explained with reference to Fig. 2. The spectrum resource management unit 5 can be configured for:
- assigning the shared spectrum resource to the second wireless communication system 2,
- causing the second wireless communication system 2 to clear, from a first point in time, at least a first section of the spectrum resource, and
- assigning, from a second point in time, the first section of the spectrum resource to the first wireless communication system 1.
That is, the shared spectrum resource is initially assigned to the second wireless communication system 2 of the mobile network operator, thus allowing the mobile network operator to use the shared spectrum resource. From a first point in time, which will be explained later in more detail, the spectrum resource management unit causes the second wireless communication system to clear the first section of the spectrum resource, in order to make this section available to the first wireless communication system as soon as possible or at a predetermined point in time. From a second point in time, which comes after the first point in time, the spectrum resource management unit 5 assigns the first section to the first wireless communication system, thus letting the incumbent use the first section. It is preferred that the first wireless communication system does not use the second section (or any subsequent section) at this stage.

It is noted that in some embodiments, the first wireless communication system may access at least the first section of the spectrum resource without any prior assignment by the spectrum resource management unit 5. This type of access may be determined by a prior agreement between, for example, the operators of the first and second wireless communication system.

The first wireless communication system 1 can issue a request to use the shared spectrum resource. The control unit 6 can be configured for determining, in response to a request from the first wireless communication system 1, the first point in time and/or the second point in time referred to above. That is, in response to such a request, the control unit 6 can instruct the second wireless communication system to clear the first section of the shared spectrum resource, thus determining the first point in time. The time required for clearing the first section may be predetermined, in which case determining the first point in time implies also determining the second point in time. The different points in time will later be further explained with reference to Figs. 2 & 3.

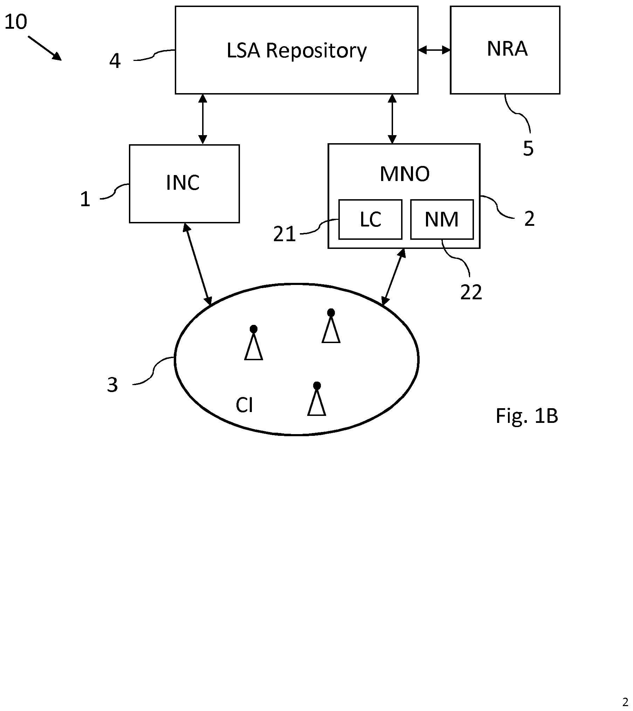

An alternative embodiment of a communication arrangement according to the invention is schematically illustrated in Fig. 1B. The communication arrangement 10 of Fig. 1B is shown to comprise a first wireless communication system 1, a second wireless communication system 2, and a communication infrastructure (CI) 3. In the embodiment of Fig. 1B, the spectrum management apparatus is constituted by an LSA (Licensed Shared Access) repository 4, which is connected to both wireless communication systems 1, 2 and allows the two systems to share a spectrum resource. The arrangement of Fig. 1B also comprises a national regulation authority (NRA) 5.

The LSA repository 4 can be configured to support the entry and storage of information describing the usage and protection requirements of the incumbent of the first wireless communication system 1. The LSA repository 4 can additionally be configured to convey any availability information to LSA controllers, and to receive acknowledgement information. The LSA repository 4 can further be configured for communicating with the national regulation authority (NRA) 5 to allow the NRA 5 to monitor the licensed shared access (LSA) system.

In the embodiment of Fig. 1B, the second network 2 is shown to comprise an LSA controller (LC) 21 and a network manager (NM) 22. It is noted that in Fig. 1B, the LSA controller (LC) 21 and the network manager (NM) 22 are shown as two separate units, but that in other embodiments the LSA controller (LC) 21 may be part of the network manager (NM) 22. In still other embodiments, the interaction between the LSA controller (LC) 21 and the second network 2 may occur at the so-called network element (NE) level, or at the element manager/domain manager (EM/DM) level, for example.

The LSA controller 21 enables the second network 2 (that is, the LSA licensee) to obtain spectrum resource availability information from the LSA repository 4 and provide acknowledgement information. The LSA controller 21 is configured to interact with the incumbent's mobile network to arrange appropriate radio transmitter configurations and receive confirmations from the mobile network.

Fig. 2 schematically shows the use of sections of a shared spectrum resource as a function of time. In the example shown, there are two sections FS1 and FS2. At T0, the mobile network operator (MNO) of the second wireless communication system 2 is using both sections.

At the first point in time T1, the spectrum resource managing apparatus (4 in Figs. 1A and 1B) receives a request message from the incumbent (INC) of the first wireless communication system 1. In response to the request message, the spectrum resource managing apparatus instructs the operator (MNO) of the second wireless communication system 2 to clear the first section (it is noted that in some embodiments, the first point in time T1 and/or the second point in time T2 may be predetermined, thus removing the need for a request message). The request message may contain the second point in time T2 at which the incumbent will start using the first section FS1.

From the second point in time T2, the incumbent (INC) starts using the first section FS1. In some embodiments, the operator (MNO) of the second communication network may indicate when the first section FS1 is cleared. In other embodiments, the incumbent may start using the first section at the second point in time T2, even if the clearing of the first section has not been completed. In either case, the incumbent will use the first section from the second point in time T2.

In the example of Fig. 2, the incumbent will initially use only the first spectrum resource section FS1. At the third point in time T3, the mobile network operator will start clearing the second spectrum resource section FS2. As the first point in time T1, the third point in time T3 may be predetermined or may be determined by another request message. At the fourth point in time T4, the (operator of) the second wireless communication system has cleared the second frequency section FS2 at least sufficiently for the incumbent (INC) of the first wireless communication system to start using the second frequency section. The fourth point in time T4 may, some embodiments, be predetermined, for example by a prior agreement between (the operator of) the first wireless communication system 1 and (the operator of) the second wireless communication system 2. In other embodiments, however, the fourth point in time T4 may not be predetermined.

It is noted that in some embodiments the second frequency section FS2 need not be completely cleared for the incumbent to start using this frequency section. In other embodiments the incumbent may wait for the second frequency section FS2 to be cleared completely.

In some embodiments, two or more clearing levels may be used. In the example above, it is assumed that at the second point in time T2 the first frequency section FS1 is sufficiently cleared for the incumbent / the first wireless communication system to start using this frequency section. The mobile network operator/ the second wireless communication system may send a message to the first wireless communication system indicating that the clearing has been completed to a certain extent. This extent may be 100%, 90% or 60%, for example. In some embodiments, the second wireless communication system sends multiple clearing messages to the first wireless communication system, for example every time a certain clearing threshold (for example 60% or 80%) has been reached for the frequency section concerned. Such clearing messages allow the first wireless communication system to decide when to start using the frequency section. The first wireless communication system could decide to postpone the intended use of a particular frequency section when the required clearing level has not, or not yet, been reached.

Embodiments can be envisaged in which both the third point in time T3 and the fourth point in time T4 are predetermined. In addition, embodiments can be envisaged in which the time difference DT2 between the third point in time T3 and the fourth point in time T4 is predetermined, thus providing a predetermined clearing time. As indicated in Fig. 2, the incumbent uses both the first frequency section FS1 and the second frequency section FS2 as from the fourth point in time T4.

In the example of Fig. 3, three spectrum resource sections FS1, FS2 and FS3 are used. As in the example of Fig. 2, the first frequency section FS1 is cleared first, starting from the first point in time T1, thus allowing the incumbent to use the first frequency section FS1 as from the second point in time T2. In the present example, clearing the second frequency section FS2 starts before clearing the first frequency section FS1 is completed. That is, the third point in time T3 is after the first point in time T1 but before the second point in time T2. In the example of Fig. 3, a third frequency section FS3 is also cleared, starting at a fifth point in time T5. The incumbent starts using the third frequency section FS3 at a sixth point in time T6.

The clearing time of the first frequency section FS1 is the difference DT1 between the second point in time T2 and the first point in time T1: DT1 = T2 - T1. Similarly, the clearing time of the second frequency section FS2 is the difference DT2 between the fourth point in time T4 and the third point in time T3: DT2 = T4 - T3. As in the example of Fig. 2, the clearing times and hence the time differences DT1 and DT2 may be predetermined, that is, determined in advance, for example by the second wireless communication system. Any time differences predetermined by the second wireless communication system may be communicated to the first wireless communication system.

As can be seen in Fig. 3, the shared spectrum resource is, in accordance with the invention, cleared per frequency section, that is, gradually.

In embodiments of the invention, the first section (FS1) and the second section (FS2) of the spectrum resource have substantially identical geographical coverages. That is, the sections of the spectrum resource cover essentially the same area. However, in other embodiments the geographical coverage of the sections may not be the same. In some embodiments, therefore, the geographical coverages of the first section and the second section may not be identical.

It is noted that the sections of the shared spectrum resource are preferably not equal to carriers. Instead, two or more sections can be provided per carrier, while it is preferred (but not required) that all sections of the shared spectrum resource are provided by a single carrier.

The present invention provides the additional advantage of reducing the signaling between the wireless communication systems. The signaling is particularly reduced when certain points in time are predetermined, either absolutely or relatively (with respect to other points in time).

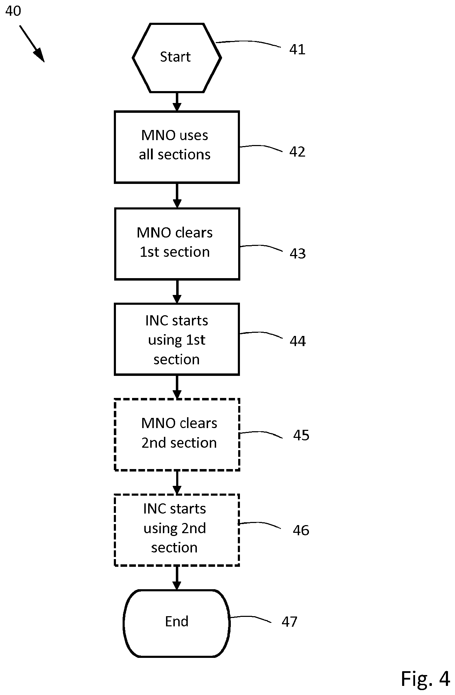

An embodiment of the method according to the invention is schematically illustrated in Fig. 4. The exemplary method 40 starts in step 41, in which a request message may be received. Initially, the mobile network operator (MNO) operating the second wireless communication system 2 uses all sections of the shared spectrum resource, in step 42. Then, either in response to a request message or at a predetermined point in time, the first section (FS1 in Figs. 2 and 3) is cleared by the MNO in step 43. Then the incumbent (INC) of the first wireless communication system starts using the first section, in step 44. Between steps 43 and 44 a certain delay may be present, which delay may be predetermined.

In some cases, the incumbent may need only a single section, in which case the method may jump from step 44 to step 47, where the method ends. Typically, however, the method continues with step 45, in which the MNO clears the second section. In step 46, the INC starts using the second section. It will be understood that the method may include additional step if more than two sections are used.

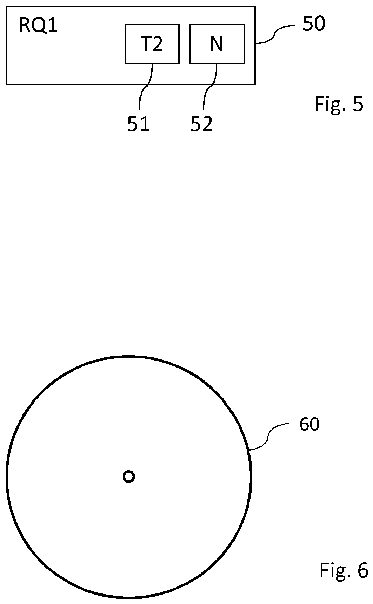

A (first) request message (RQ1) is schematically illustrated in Fig. 5. The exemplary request message 50 is shown to comprise a time indication 51. In the present example, the time indication contains the second point in time T2, indicating that the first wireless communication system 1 requests that at least the first section of the shared spectrum resource be cleared by point in time T2. The request message 50 may further comprise a sections indicator 52 indicating the number N of sections to be cleared by T2. In many cases, N will be equal to 1, indicating that one section should be cleared by T2, but N may also be larger than 1. The request message 50 may additionally, or alternatively, contain additional information, such as the first point in time T1 if this point in time differs from the moment of receipt of the request message 50.

Fig. 6 schematically shows a software program product 60. A software program product for carrying out an embodiment of the method according to the present invention may comprise a tangible carrier, such as a DVD or a memory stick, on which a software program is stored. The software program comprises instructions for causing a processor to carry out the method steps described above. Although the software program product preferably is a tangible product, it may also be a non-tangible product, for example a software program which can be downloaded via the Internet.

As will be appreciated by one skilled in the art, aspects of the present invention may be embodied as a system, method or computer program product. Accordingly, aspects of the present invention may take the form of an entirely hardware embodiment, a software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, for example, stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a solid-state drive, a random access memory (RAM), a non-volatile memory device, a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this disclosure, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless (using electromagnetic and/or optical radiation), wired, optical fiber, cable, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on a user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described above with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the functions noted in the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It will be understood that the invention also provides a communication arrangement comprising a first wireless communication system, a second wireless communication system and an apparatus for managing access to a spectrum resource shared between the first wireless communication system and the second wireless communication system.

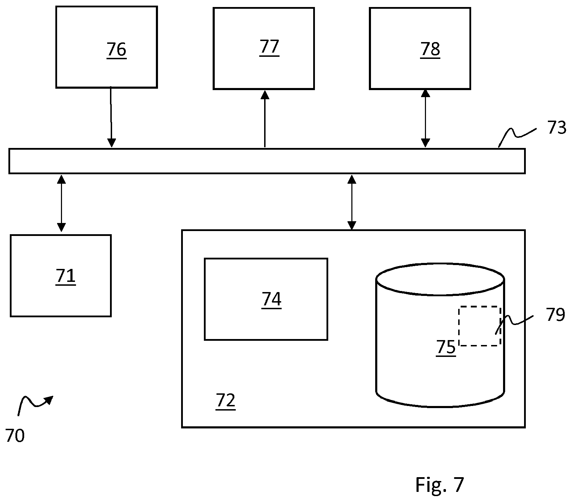

FIG. 7 is a block diagram illustrating an exemplary data processing system that may be used as a part of a user equipment or as a network node, such as base station.

Data processing system 70 may include at least one processor 71 coupled to memory elements 72 through a system bus 73. As such, the data processing system 70 may store program code within memory elements 72. Further, processor 71 may execute the program code accessed from memory elements 72 via system bus 73. In one aspect, data processing system 70 may be implemented as a computer that is suitable for storing and/or executing program code. It should be appreciated, however, that data processing system 70 may be implemented in the form of any system including a processor and memory that is capable of performing the functions described within this specification.

Memory elements 72 may include one or more physical memory devices such as, for example, local memory 74 and one or more bulk storage devices 75. Local memory may refer to random access memory or other non-persistent memory device(s) generally used during actual execution of the program code. A bulk storage device 75 may be implemented as a hard drive or other persistent data storage device. The data processing system 70 may also include one or more cache memories (not shown) that provide temporary storage of at least some program code in order to reduce the number of times program code must be retrieved from bulk storage device 65 during execution.

Input/output (I/O) devices depicted as input device 76 and output device 77 optionally can be coupled to the data processing system 70. Examples of input devices may include, but are not limited to, for example, a keyboard, a pointing device such as a mouse, a touchscreen, or the like. Examples of output device may include, but are not limited to, for example, a monitor or display, speakers, or the like. Input device 76 and/or output device 77 may be coupled to data processing system 60 either directly or through intervening I/O controllers. A network adapter 78 may also be coupled to data processing system 70 to enable it to become coupled to other systems, computer systems, remote network devices, and/or remote storage devices through intervening private or public networks. The network adapter 78 may comprise a data receiver for receiving data that is transmitted by said systems, devices and/or networks to said data processing system 70 and a data transmitter for transmitting data to said systems, devices and/or networks. Modems, cable modems, and Ethernet cards are examples of different types of network adapters that may be used with data processing system 70.

As pictured in FIG. 7, memory elements 72 may store an application 79. It should be appreciated that data processing system 70 may further execute an operating system (not shown) that can facilitate execution of the application. Applications implemented in the form of executable program code can be executed by data processing system 70, for example, by processor 71. Responsive to executing the application 79, the data processing system 70 may be configured to perform one or more operation as disclosed in the present application in further detail.

In one aspect, for example, data processing system 70 may represent a spectrum resource management apparatus 4 or a network manager 22. In that case, application 79 may represent a client application that, when executed, configures data processing system 70 to perform the various functions described herein with reference to a spectrum resource management apparatus 4 or a network manager.

It is noted that the method has been described in terms of steps to be performed, but it is not to be construed that the steps described must be performed in the exact order described and/or one after another. One skilled in the art may envision to change the order of the steps and/or to perform steps in parallel to achieve equivalent technical results.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The abstract should not be used to limit the scope of the claims, and neither should reference numbers in the claims.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiments were chosen and described in order to best explain the principles of the invention and the practical application, and to enable others of ordinary skill in the art to understand the invention for various embodiments with various modifications as are suited to the particular use contemplated.

Various embodiments of the invention may be implemented as a program product for use with a computer system or a processor, where the program(s) of the program product define functions of the embodiments (including the methods described herein). In one embodiment, the program(s) can be contained on a variety of non-transitory computer-readable storage media (generally referred to as "storage"), where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (for example, read-only memory devices within a computer such as CD-ROM disks readable by a CD-ROM drive, ROM chips or any type of solid-state non-volatile semiconductor memory) on which information is permanently stored; and (ii) writable storage media (for example, flash memory, floppy disks within a diskette drive or hard-disk drive or any type of solid-state random-access semiconductor memory) on which alterable information is stored.

It will therefore be understood by those skilled in the art that the present invention is not limited to the embodiments mentioned above and that many additions and modifications are possible without departing from the scope of the invention as defined in the appending claims.

## Claims

1. A method for a first wireless communication system (1) and a second wireless communication system (2) to share a spectrum resource,
wherein the spectrum resource is divided into at least a first section (FS1) and a second section (FS2),
the method comprising:
- the second wireless communication system (2) using the first section (FS1) and the second section (FS2) of the spectrum resource until a first point in time (T1),
- the second wireless communication system (2) clearing the first section (FS1) of the spectrum resource from the first point in time (T1), and
- the first wireless communication system (1) using the first section (FS1) of the spectrum resource from a second point in time (T2),
- the second wireless communication system (1) continuing to use the second section (FS2) of the spectrum resource from the second point in time (T2), wherein the second point in time (T2 is later than the first point in time (T1),
- the second wireless communication system (2) clearing, from a third point in time (T3), the second section (FS2) of the spectrum resource, and
- the first wireless communication system (1) using, from a fourth point in time (T4), the first section (FS1) and the second section (FS2) of the spectrum resource, wherein the fourth point in time (T4) is later than the third point in time (T3).

2. The method according to claim 1, further comprising:
- the first wireless communication system (1) issuing a request (RQ1) to the second wireless communication system (2),
wherein the request (RQ1) comprises the second point in time (T2).

3. The method according to claim 2, wherein the second point in time (T2) is further determined by spectrum resource use information from the second wireless communication system (2).

4. The method according to claim 1, wherein the second point in time (T2) is predetermined by the first wireless communication system (1) and/or the second wireless communication system (2).

5. The method according to any of the preceding claims, wherein the time duration between the first point in time (T1) and the second point in time (T2) is predetermined by the second wireless communication system (2).

6. The method according to any of the preceding claims, wherein the fourth point in time (T4) is determined by a further request (RQ2) from the first wireless communication system (1).

7. The method according to any of the preceding claims, wherein the first section (FS1) and the second section (FS2) of the spectrum resource are non-overlapping.

8. The method according to any of the preceding claims, wherein clearing comprises at least one of:
- aborting communications, and
- transferring communications to another spectrum resource.

9. A software program product comprising instructions being configured, when being executed by a processor of an apparatus configured for managing access to a spectrum resource shared between a first wireless communication system and a second wireless communication system, wherein the spectrum resource is divided into at least a first section and a second section, for causing the processor to carry out the steps of the method according to any of the preceding claims.

10. An apparatus (4) configured for managing access to a spectrum resource shared between a first wireless communication system (1) and a second wireless communication system (2),
wherein the spectrum resource is divided into at least a first section (FS1) and a second section (FS2),
the apparatus comprising a spectrum resource management unit (5) for managing the spectrum resource,
wherein the spectrum resource management unit is configured for:
- assigning the first section and the second section of the spectrum resource to the second wireless communication system (2),
- causing the second wireless communication system (2) to clear, from a first point in time (T1), the first section (FS1) of the spectrum resource,
- assigning, from a second point in time (T2), the first section (FS1) of the spectrum resource to the first wireless communication system (1),wherein the second point in time (T2) is later than the first point in time (T1),
- causing the second wireless communication system (2) to clear, from a third point in time (T3), at least the second section (FS2) of the spectrum resource,
- assigning, from a fourth point in time (T4), the second section (FS2) of the spectrum resource to the first wireless communication system (1), wherein the fourth point in time (T4) is later than the second point in time (T2).

11. The apparatus according to claim 10, further comprising a control unit (6) configured for:
- determining, in response to a request from the first wireless communication system (1), the first point in time (T1) and/or the second point in time (T2).

12. A communication arrangement comprising a first wireless communication system (1), a second wireless communication system (2) and an apparatus (4) according to any of claims 10 or 11.

## Patentansprüche

1. Verfahren zum gemeinsamen Nutzen einer Spektrumsressource für ein erstes drahtloses Kommunikationssystem (1) und ein zweites drahtloses Kommunikationssystem (2),
wobei die Spektrumsressource mindestens in einen ersten Abschnitt (FS1) und einen zweiten Abschnitt (FS2) aufgeteilt ist,
wobei das Verfahren umfasst, dass:
- das zweite drahtlose Kommunikationssystem (2) den ersten Abschnitt (FS1) und den zweiten Abschnitt (FS2) der Spektrumsressource bis zu einem ersten Zeitpunkt (T1) verwendet,
- das zweite drahtlose Kommunikationssystem (2) den ersten Abschnitt (FS1) der Spektrumsressource von dem ersten Zeitpunkt (T1) an löscht, und
- das erste drahtlose Kommunikationssystem (1) den ersten Abschnitt (FS1) der Spektrumsressource von einem zweiten Zeitpunkt (T2) an verwendet,
- das zweite drahtlose Kommunikationssystem (2) den zweiten Abschnitt (FS2) der Spektrumsressource von dem zweiten Zeitpunkt (T2) an weiterhin verwendet, wobei der zweite Zeitpunkt (T2) später als der erste Zeitpunkt (T1) ist,
- das zweite drahtlose Kommunikationssystem (2) den zweiten Abschnitt (FS2) der Spektrumsressource von einem dritten Zeitpunkt (T3) an löscht und
- das erste drahtlose Kommunikationssystem (1) den ersten Abschnitt (FS1) und den zweiten Abschnitt (FS2) der Spektrumsressource von einem vierten Zeitpunkt (T4) an verwendet, wobei der vierte Zeitpunkt (T4) später als der dritte Zeitpunkt (T3) ist.

2. Verfahren nach Anspruch 1, das außerdem umfasst, dass:
- das erste drahtlose Kommunikationssystem (1) eine Anforderung (RQ1) an das zweite drahtlose Kommunikationssystem (2) ausgibt, wobei die Anforderung (RQ1) den zweiten Zeitpunkt (T2) umfasst.

3. Verfahren nach Anspruch 2, wobei der zweite Zeitpunkt (T2) außerdem durch Nutzungsinformationen der Spektrumsressource von dem zweiten drahtlosen Kommunikationssystem (2) bestimmt wird.

4. Verfahren nach Anspruch 1, wobei der zweite Zeitpunkt (T2) durch das erste drahtlose Kommunikationssystem (1) und/oder das zweite drahtlose Kommunikationssystem (2) vorbestimmt wird.

5. Verfahren nach einem der vorhergehenden Ansprüche, wobei die Zeitdauer zwischen dem ersten Zeitpunkt (T1) und dem zweiten Zeitpunkt (T2) durch das zweite drahtlose Kommunikationssystem (2) vorbestimmt wird.

6. Verfahren nach einem der vorhergehenden Ansprüche, wobei der vierte Zeitpunkt (T4) durch eine weitere Anforderung (RQ2) von dem ersten drahtlosen Kommunikationssystem (1) bestimmt wird.

7. Verfahren nach einem der vorhergehenden Ansprüche, wobei sich der erste Abschnitt (FS1) und der zweite Abschnitt (FS2) der Spektrumsressource nicht überschneiden.

8. Verfahren nach einem der vorhergehenden Ansprüche, wobei das Löschen mindestens eines umfasst von:
- Abbrechen von Kommunikationen und
- Übergeben von Kommunikationen an eine andere Spektrumsressource.

9. Computerprogrammprodukt, das Befehle umfasst, die konfiguriert sind, wenn sie von einem Prozessor einer Einrichtung ausgeführt werden, die konfiguriert ist zum Verwalten eines Zugriffs auf eine Spektrumsressource, die von einem ersten drahtlosen Kommunikationssystem und einem zweiten drahtlosen Kommunikationssystem gemeinsam genutzt wird, wobei die Spektrumsressource in mindestens einen ersten Abschnitt und einen zweiten Abschnitt aufgeteilt ist, um den Prozessor zu veranlassen die Schritte des Verfahrens nach einem der vorhergehenden Ansprüche auszuführen.

10. Einrichtung (4), die konfiguriert ist zum Verwalten eines Zugriffs auf eine Spektrumsressource, die von einem ersten drahtlosen Kommunikationssystem (1) und einem zweiten drahtlosen Kommunikationssystem (2) gemeinsam genutzt wird,
wobei die Spektrumsressource mindestens in einen ersten Abschnitt (FS1) und einen zweiten Abschnitt (FS2) aufgeteilt ist,
wobei die Einrichtung eine Spektrumsressourcenverwaltungseinheit (5) zum Verwalten der Spektrumsressource umfasst, wobei die Spektrumsressourcenverwaltungseinheit konfiguriert ist zum:
- Zuweisen des ersten Abschnitts und des zweiten Abschnitts der Spektrumsressource zu dem zweiten drahtlosen Kommunikationssystem (2),
- Veranlassen, dass das zweite drahtlose Kommunikationssystem (2) den ersten Abschnitt (FS1) der Spektrumsressource von einem ersten Zeitpunkt (T1) an löscht,
- Zuweisen, von einem zweiten Zeitpunkt (T2) an, des ersten Abschnitts (FS1) der Spektrumsressource zu dem ersten drahtlosen Kommunikationssystem (1), wobei der zweite Zeitpunkt (T2) später als der erste Zeitpunkt (T1) ist,
- Veranlassen, dass das zweite drahtlose Kommunikationssystem (2) mindestens den zweiten Abschnitt (FS2) der Spektrumsressource von einem dritten Zeitpunkt (T3) an löscht,
- Zuweisen, von einem vierten Zeitpunkt (T4) an, des zweiten Abschnitts (FS2) der Spektrumsressource zu dem ersten drahtlosen Kommunikationssystem (1), wobei der vierte Zeitpunkt (T4) später als der zweite Zeitpunkt (T2) ist.

11. Einrichtung nach Anspruch 10, die außerdem eine Steuereinheit (6) umfasst, die konfiguriert ist zum:
- Bestimmen, als Reaktion auf eine Anforderung von dem ersten drahtlosen Kommunikationssystem (1), des ersten Zeitpunkts (T1) und/oder des zweiten Zeitpunkts (T2) .

12. Kommunikationsanordnung, die ein erstes drahtloses Kommunikationssystem (1), ein zweites drahtloses Kommunikationssystem (2) und eine Einrichtung nach einem der Ansprüche 10 oder 11 umfasst.

## Revendications

1. Procédé permettant à un premier système de communication sans fil (1) et à un second système de communication sans fil (2) de partager une ressource spectrale,
la ressource spectrale étant divisée en au moins une première section (FS1) et une seconde section (FS2),
le procédé comprenant les étapes consistant à :
- utiliser, par le second système de communication sans fil (2), la première section (FS1) et la seconde section (FS2) de la ressource spectrale jusqu'à un premier point dans le temps (T1),
- libérer, par le second système de communication sans fil (2), la première section (FS1) de la ressource spectrale à partir du premier point dans le temps (T1), et
- utiliser, par le premier système de communication sans fil (1), la première section (FS1) de la ressource spectrale à partir d'un deuxième point dans le temps (T2),
- continuer d'utiliser, par le second système de communication sans fil (1), la seconde section (FS2) de la ressource spectrale à partir du deuxième point dans le temps (T2), le deuxième point dans le temps (T2) étant postérieur au premier point dans le temps (T1),
libérer, par le second système de communication sans fil (2), à partir d'un troisième point dans le temps (T3), la seconde section (FS2) de la ressource spectrale, et
- utiliser, par le premier système de communication sans fil (1), à partir d'un quatrième point dans le temps (T4), la première section (FS1) et la seconde section (FS2) de la ressource spectrale, le quatrième point dans le temps (T4) étant postérieur au troisième point dans le temps (T3).

2. Procédé selon la revendication 1, comprenant en outre l'étape consistant à :
- émettre, par le premier système de communication sans fil (1), une demande (RQ1) vers le second système de communication sans fil (2),
la demande (RQ1) comprenant le deuxième point dans le temps (T2).

3. Procédé selon la revendication 2, dans lequel le deuxième point dans le temps (T2) est en outre déterminé par des informations d'utilisation de ressource spectrale en provenance du second système de communication sans fil (2) .

4. Procédé selon la revendication 1, dans lequel le deuxième point dans le temps (T2) est prédéterminé par le premier système de communication sans fil (1) et/ou le second système de communication sans fil (2).

5. Procédé selon l'une quelconque des revendications précédentes, dans lequel la durée entre le premier point dans le temps (T1) et le deuxième point dans le temps (T2) est prédéterminée par le second système de communication sans fil (2).

6. Procédé selon l'une quelconque des revendications précédentes, dans lequel le quatrième point dans le temps (T4) est déterminé par une demande supplémentaire (RQ2) en provenance du premier système de communication sans fil (1) .

7. Procédé selon l'une quelconque des revendications précédentes, dans lequel la première section (FS1) et la seconde section (FS2) de la ressource spectrale ne se chevauchent pas.

8. Procédé selon l'une quelconque des revendications précédentes, dans lequel la libération comprend au moins une des étapes suivantes consistant à :
- interrompre la communication, et
- transférer la communication vers une autre ressource spectrale.

9. Produit-programme logiciel comprenant des instructions configurées, lorsqu'elles sont exécutées par un processeur d'un appareil configuré pour gérer un accès à une ressource spectrale partagée entre un premier système de communication sans fil et un second système de communication sans fil, la ressource spectrale étant divisée en au moins une première section et une seconde section, pour amener le processeur à exécuter les étapes du procédé selon l'une quelconque des revendications précédentes.

10. Appareil (4) configuré pour gérer un accès à une ressource spectrale partagée entre un premier système de communication sans fil (1) et un second système de communication sans fil (2),
la ressource spectrale étant divisée en au moins une première section (FS1) et une seconde section (FS2),
l'appareil comprenant une unité de gestion de ressource spectrale (5) pour gérer la ressource spectrale,
l'unité de gestion de ressource spectrale étant configurée pour :
attribuer la première section et la seconde section de la ressource spectrale au second système de communication sans fil (2),
amener le second système de communication sans fil (2) à libérer, à partir d'un premier point dans le temps (T1), la première section (FS1) de la ressource spectrale,
attribuer, à partir d'un deuxième point dans le temps (T2), la première section (FS1) de la ressource spectrale au premier système de communication sans fil (1), le deuxième point dans le temps (T2) étant postérieur au premier point dans le temps (T1),
- amener le second système de communication sans fil (2) à libérer, à partir d'un troisième point dans le temps (T3), au moins la seconde section (FS2) de la ressource spectrale,
- attribuer, à partir d'un quatrième point dans le temps (T4), la seconde section (FS2) de la ressource spectrale au premier système de communication sans fil (1), le quatrième point dans le temps (T4) étant postérieur au deuxième point dans le temps (T2).

11. Appareil selon la revendication 10, comprenant en outre une unité de commande (6) configurée pour :
- déterminer, en réponse à une demande du premier système de communication sans fil (1), le premier point dans le temps (T1) et/ou le deuxième point dans le temps (T2) .

12. Agencement de communication comprenant un premier système de communication sans fil (1), un second système de communication sans fil (2) et un appareil (4) selon l'une quelconque des revendications 10 et 11.
